(19) Europäisches Patentamt

European Patent Office

Office européen des brevets

(11) Publication number: **0 165 502**
**B1**

(12) **EUROPEAN PATENT SPECIFICATION**

(45) Date of publication of patent specification: **08.08.90**

(21) Application number: **85106388.3**

(22) Date of filing: **23.05.85**

(51) Int. Cl.⁵: **B 23 H 7/08**

(54) **Wire electrode for use in wire electro-discharge machining.**

(30) Priority: **23.05.84 JP 105508/84**
**21.06.84 JP 128978/84**

(43) Date of publication of application:
**27.12.85 Bulletin 85/52**

(45) Publication of the grant of the patent:
**08.08.90 Bulletin 90/32**

(84) Designated Contracting States:
**AT BE CH DE FR GB LI NL SE**

(56) References cited:
**PATENTS ABSTRACTS OF JAPAN, Vol. 8, no.
108 (M-297)1545r, 19th May 1984**

(73) Proprietor: **SUMITOMO ELECTRIC INDUSTRIES
LIMITED
No. 15, Kitahama 5-chome Higashi-ku
Osaka-shi Osaka 541 (JP)**

(72) Inventor: **Sawada, Kazuo c/o Osaka Works
Sumitomo Electric Ind. Ltd. 1-3, Shimaya 1-
chome
Konohana-ku Osaka-shi Osaka (JP)**
Inventor: **Takano, Satoshi c/o Osaka Works
Sumitomo Electric Ind. Ltd. 1-3, Shimaya 1-
chome
Konohana-ku Osaka-shi Osaka (JP)**
Inventor: **Ezaki, Shigeo c/o Osaka Works
Sumitomo Electric Ind. Ltd. 1-3, Shimaya 1-
chome
Konohana-ku Osaka-shi Osaka (JP)**

(74) Representative: **Eitle, Werner, Dipl.-Ing. et al
Hoffmann, Eitle & Partner Patentanwälte
Arabellastrasse 4
D-8000 München 81 (DE)**

Courier Press, Leamington Spa, England.

# EP 0 165 502 B1

## Description

The present invention relates to an electrode for use in a wire electro-discharge machining, and to the use of such an electrode.

Wire electro-discharge machining is a processing of a workpiece such as metallic material, wherein an electrode wire is opposed to the work with a suitable gap formed therebetween, causing electric discharge between the wire electrode and the workpiece through medium such as water or the like displacing the wire electrode and the work relatively so as to cut or shape the work according to a predetermined pattern.

In the electro-discharge machining as mentioned above, conventionally an elongate electrode wire with 0.05 to 0.25 mm diameter is prepared and the electrode wire is fed to the work as the end portion of the wire is exhausted.

Following conditions are generally desirable in wire electro-discharge machining.

(1) processing speed; a faster processing speed is required compared to the processing speed obtained using the conventional wire electrode;

(2) accuracy of the dimensions and the condition of the surface of the shaped workpiece; the shaping process must be done with a high accuracy without causing pieces of the wire electrode to be sputtered onto the surface of the workpiece;

(3) workability; interruption of the wire electrode during the electric discharge machining should be decreased;

(4) cost; it is desired that the cost of the wire electrode be a cheap as possible since the wire electrode is expended.

The processing speed may be made high by stabilizing the electric discharge between the wire electrode and the workpiece. However, conventional wire electrode tends to cause the surface of the workpiece to be rough when the processing speed is fast.

In order to shape the work piece with a high accuracy, it is necessary to use the wire electrode of high accuracy diameter stretched with a high tension. Therefore, the wire electrode must be strong enough against the tension for preventing break down of the wire.

In order to shape the surface of the workpiece whilst preventing formation of surface roughness, the electric discharge between the wire electrode and the workpiece must be stable and uniform. According to the conventional wire electrode, it has been difficult to satisfy both requirements of increasing the processing speed and improving the accuracy of the workpiece with a good surface condition, therefore it is strongly desired to provide a wire electrodes for satisfying the requirements as mentioned above.

In addition, the wire electrode may be broken down due to the electrical shorting between the wire electrode and the workpiece, nonuniform discharge or the tension loaded on the wire electrode whilst a high accuracy of the wire, controlled behaviour of the electric discharge and a high tensile strength, are required.

Other requirements for the wire electrode are inexpensiveness of alloy material and workability of drawing wire into a thin wire such as 0.05 to 0.25 mm diameters.

Conventionally, as the wire electrodes, copper wires, brass wires (Cu containing 30% or 35% Zn) and tungsten wires have been used. However, the conventional wire electrode made of the materials mentioned above do not fulfil the above mentioned requirements as explained hereinafter.

The copper wires tend to break due to relatively low mechanical strength and the processing speed is lower than that of the brass wires.

Although the brass wires can improve the processing speed compared to that of the copper wires, the processing speed obtained by the brass wires is not still sufficient. Furthermore, the brass wires electrodes can not provide a high size accuracy and a sufficient surface condition of the workpiece. The brass wire electrodes show another disadvantage in that the workability is not good.

The disadvantages of the tungsten wire electrodes are difficulty in wire drawing work and the cost is expensive.

In order to eliminate the disadvantages as mentioned above, Japanese Patent Publication (Unexamined) Tokkai sho 59—50141 discloses wire electrode material composed primarily of Cu including Zn of 20 through 50% by weight and one or more components of Ni, Co and Si with the total amount of 0.5 through 2% by weight. Furthermore, Japanese Patent Publication (Unexamined) Tokkai sho 57—41134 discloses a wire electrode material composed primarily of Cu including Zn of 5 through 40% by weight and Al of 0.1 through 4% by weight.

However, the former materials shows drawbacks that workability of casting and wire drawing is inferior if Si is included more than 1.5% by weight. As to the latter material, spluttering of the wire electrode to the workpiece cannot be suppressed in case of a high accuracy machining with pure water of high resistivity.

JP—A—59—19639 which is regarded as closest prior art document discloses various Cu-based alloys including 25% Zn, 0.1% Al, and 0.1% Si; 35% Zn, 0.8% Al' and 0.5% Si; or 37% Zn, 0.3% Al and 0.3% Si. It further discloses alloys which include one or two constituents from Sn, Mg, and Zr with a total amount of 0.05—0.5% by weight.

An object of the present invention is to provide a wire electrode for use in an electro-discharge machining which enables improvement of the processing speed and shaping of the workpiece with a

2

uniform surface and a high accuracy and is cheap in cost.

One embodiment of the present invention provides a wire electrode for use in electro-discharge machining which consists of 5—38% by weight zinc; from 0.1 to less than 0.5% by weight silicon; optional impurities present in an amount which is insufficient to affect the properties of the wire electrode; the balance being copper.

Zn is added to the wire electrode material either to increase the processing speed of the electro discharge machining or to reinforce the mechanical strength of the wire electrode.

The amount of Zn in the wire electrode material according to the present invention is selected to be 5 through 38% by weight partly because with Zn less than 5% by weight of the technical effects described above cannot be expected and partly because with Zn more than 38%, the characteristics of the wire electrode cannot be so improved as to justify the amount of Zn, which rather increases difficulty of the workability of wire drawing.

Si is added to the wire electrode material to reinforce the mechanical strength of the wire under a high temperature such as 300° to 400°C so as to prevent the breakdown of the wire electrode and to prevent undesired sputtering of the wire electrode onto the workpiece.

The amount of Si in the wire electrode material is 0.1% through to less than 0.5% by weight partly because with Si less than 0.1% by weight, the technical effects described above cannot be expected and partly because with Si of 0.5% by weight or more, workability of the wire electrode material is much decreased without increment of the technical effects described above.

The wire electrode material according to the present invention may include one or more compositions such as Sn, Ag, Mg, Al and Fe as impurities with the total amount less than 1% by weight.

Another embodiment of the present invention provides a wire electrode for use in electro-discharge machining which consists of 30—40% by weight zinc; 0.1—1.2% by weight silicon; 0.01—0.18% by weight aluminium; optional impurities present in an amount which is insufficient to affect the properties of the wire electrode; the balance being copper.

A third embodiment of the present invention provides a wire electrode for use in electro-discharge machining which consists of 30—40% by weight zinc; 0.1—1.2% by weight silicon; 0.01—0.18% by weight aluminium, 0.05—0.5% total amount by weight of up to two additives selected from Ga, In, Sn, Mg, Zr and Y; optional impurities present in an amount which is insufficient to affect the properties of the wire electrode; the balance being copper.

The wire electrode material composed primarily of copper material including Zn, Si and Al with Si less than 1.2% by weight and Al of up to 0.18% by weight shows good wire drawing characteristics and behaviour of electric discharging characteristics in which sputtering of Cu component onto the workpiece can be decreased to substantially negligible amounts. Addition of one or two kinds of composition selected from the group comprising Ga, In, Sn, Mg, Zr an Y with the amount of 0.05 through 0.5% by weight enables to reinforce the mechanical strength of the wire electrode under the high temperature in addition to suppression of sputtering of the Cu component.

The amount of Zn of the wire electrode material is selected within 30 through 40% by weight partly because with Zn less than 30% by weight, the processing speed cannot be improved and partly because with Zn more than 40% by weight, drawability is harmed.

The amount of Si is selected within 0.1% through 1.2% by weight, partly because with Si less than 0.1% by weight, the processing speed cannot be improved and partly because with Si more than 1.2% by weight , the workability of casting and wire drawability becomes bad.

The amount of Al is selected with 0.01% through 0.18% by weight partly because with Al less than 0.01%, the wire drawability can not be improved and partly because with Al more than 0.18% by weight, the wire drawing characteristic is lowered.

The amount of the composition selected from the group of Ga, In, Sn, Mg, Zr an Y is selected within 0.05% through 0.5% by weight partly because with the composition less than 0.05% by weight, the mechanical strength under a high temperature can not be reinforced and the sputtering of the Cu component can not be decreased and partly because with the composition more than 0.5% by weight, the respective characteristics mentioned above are not improved.

## Example 1

With mother alloy having electric copper including Zn, several kinds of ingot having such components as shown in Table 1 were prepared. The respective ingots were drawn so as to shape rough wires of 8 mm diameter under hot rolling in a known method. The surface of each of the rough wires was peeled off then each rough wire was subjected to intermediate drawing processes to draw 5.4 mm and 2.6 mm diameter with intermediate heat treatment. Finally there were obtained wire electrodes having the components shown in Table 1 with 0.2 mm diameter.

Workpieces made of SKD 11 of Japanese Industrial Standard which meets ISO 21 having 50 mm thickness were processed by electro-discharge machining using the respective wire electrodes prepared in the manner as described above. The condition of the discharge machining was as follows:

| machining voltage | 4.5 volt |
|---|---|
| average machining current | 9.8 Ampere |
| capacitor | 1.0 μF |
| ON time | 4.5 μ sec. |
| OFF time | 4.2 μ sec. |
| specific resistivity of pure water | $1.5 \times 10^4$ Ω.cm |

The results are shown in Table 1. The processing speed and amount of sputtering of the electrode composition onto the workpiece were represented by the ratio of the processing speed and amount of the sputtering of the examples of the wire electrode of the present invention and those of the conventional wire electrodes by defining the respective processing speed and the amount of the sputtering 1.00 of the conventional copper wire electrode. The processing speed and the amount of the sputtering were measured while the workpieces were cut by 5 mm along a straight line.

As understood from Table 1, good processing speed properties are obtained and the amount of sputtering of the wire electrode material onto the workpiece is negligibly small. Also the production cost of the wire electrode of the invention may be cheap. In addition the wire electrode of the present invention enables stabilization of the discharge. Furthermore, the wire electrode of the present invention ensures finishing the workpiece with a good surface avoiding formation of roughness.

Example 2

Mother alloys containing such components as shown in Table 2 were prepared and cast. There were obtained wire electrodes having the components shown in the table 2 with 0.250 mm ±0.001 mm diameter..

Workpieces made of SKD 1 of Japanese Industrial Standard which meets ISO 22 having 40 mm thickness were processed by electro-discharge machining using the respective wire electrodes prepared in the manner as described above. The condition of the discharge machining was as follows;

| machining voltage | 110 Volt |
|---|---|
| average machining current | 10 Ampere |
| capacitor | 1.0 μF |
| wire tension force | 860 g |
| specific resistivity of pure water | $4 \times 10^4$ Ωcm |
| | $3 \times 10^4$ Ω.cm |
| | $2 \times 10^4$ Ω.cm |

Results are shown in Table 2

As understood from Table 2, it is apparent that the wire electrode according to the example 2 can show good workability of casting and drawing and sputtering of the wire electrode material onto the workpiece is substantially negligibly small.

TABLE 1

| | No. | Zn (wt%) | Si (wt%) | other (wt%) | Cu | draw-ability | processing speed | amount of sputtering of Cu, Zn |
|---|---|---|---|---|---|---|---|---|
| Examples | 1 | 34.0 | 0.18 | — | rest | good | 1.51 | 0.50 |
| | 2 | 35.1 | 0.33 | — | rest | good | 1.55 | 0.55 |
| | 3 | 35.5 | 0.40 | — | rest | good | 1.53 | 0.33 |
| | 4 | 34.3 | 0.45 | — | rest | slightly bad | 1.65 | 0.19 |
| | 5 | 19.6 | 0.13 | Sn 0.9 | rest | good | 1.31 | 0.65 |
| | 6 | 20.8 | 0.19 | — | rest | good | 1.33 | 0.61 |
| prior art | 1 | tough pitch Cu | | | | good | 1.00 | 1.00 |
| Comparative Examples | 1 | 34.9 | — | — | rest | good | 1.26 | 0.90 |
| | 2 | 29.8 | — | — | rest | good | 1.13 | 0.88 |
| | 3 | 34.8 | 0.01 | — | rest | good | 1.20 | 0.88 |
| | 4 | 34.1 | 1.35 | — | rest | impossible | — | — |
| | 5 | 34.1 | — | Sn 1.1 | rest | good | 1.23 | 0.88 |

EP 0 165 502 B1

TABLE

| No. | Zu | Si | Al | others | | | Cu | casting | drawability | amount of sputtering of Cu for resistivity of water | | |
|---|---|---|---|---|---|---|---|---|---|---|---|---|
| | | | | | | | | | | $4 \times 10^4$ $\Omega$ cm | $3 \times 10^4$ $\Omega$ cm | $2 \times 10^4$ $\Omega$ cm |
| 1 | 33.8 | 0.13 | 0.08 | Ga 0.34 | — | — | rest | good | good | small | none | none |
| 2 | 34.4 | 0.31 | 0.09 | — | — | — | rest | good | good | none | none | none |
| 3 | 34.8 | 0.81 | 0.08 | — | — | — | rest | good | good | none | none | none |
| 4 | 34.2 | 1.10 | 0.09 | — | — | — | rest | good | good | none | none | none |
| 5 | 34.1 | 0.13 | 0.18 | — | — | — | rest | good | good | none | none | none |
| 6 | 33.2 | 0.93 | 0.18 | — | — | — | rest | good | good | none | none | none |
| 7 | 33.3 | 0.11 | 0.08 | In 0.23 | Y 0.03 | — | rest | good | good | none | none | none |
| 8 | 34.1 | 0.30 | 0.08 | Zr 0.09 | Mg 0.09 | — | rest | good | good | none | none | none |
| 9 | 34.2 | 00.19 | 0.09 | Sn 0.33 | — | — | rest | good | good | small | none | none |
| 10 | 31.1 | 0.81 | 0.09 | — | — | — | rest | good | good | small | none | none |
| 11 | 30.3 | 0.93 | 0.16 | — | — | — | rest | good | good | small | none | none |
| 12 | 39.1 | 0.13 | 0.08 | — | — | — | rest | slightly bad | slightly bad | none | none | none |
| 13 | 34.2 | — | — | — | — | — | rest | good | good | great | great | great |
| 14 | 33.8 | — | 1.2 | — | — | — | rest | good | good | great | small | none |
| 15 | 33.9 | 1.1 | — | — | — | — | rest | good | good | great | none | none |
| 16 | 34.6 | 1.5 | — | — | — | — | rest | bad | bad | none | none | none |
| 17 | 33.2 | 0.05 | 1.2 | — | — | — | rest | good | good | great | none | none |
| 18 | 32.9 | — | — | Ni 1.0 | — | — | rest | good | good | great | none | none |
| 19 | 26.1 | 0.41 | 0.09 | — | — | — | rest | good | good | great | great | great |
| 20 | 45.0 | 0.43 | 0.16 | — | — | — | rest | good | impossible | — | — | — |

Examples: No. 1–12

Comparative Examples: No. 13–20

## Claims

1. A wire electrode for use in electro-discharge machining which consists of 5—38% by weight zinc; from 0.1 to less than 0.5% by weight of silicon; optional impurities present in an amount which is insufficient to affect the properties of the wire electrode; the balance being copper.

2. A wire electrode for use in electro-discharge machining which consists of 30—40% by weight zinc; 0.1—1.2% by weight silicon; 0.01—0.18% by weight aluminium; optional impurities present in an amount which is insufficient to affect the properties of the wire electrode; the balance being copper.

3. A wire electrode for use in electro-discharge machining which consists of 30—40% by weight zinc; 0.1—1.2% by weight silicon; 0.01—0.18% by weight aluminium; 0.05—0.5% total amount by weight of up to two additives selected from Ga, In, Sn, Mg, Zr and Y; optional impurities present in an amount which is insufficient to affect the properties of the wire electrode; the balance being copper.

4. A method of electro-discharge machining in which a wire electrode according to any one of the claims 1 to 3 is employed.

5. The use of a wire electrode according to any of claims 1 to 3 for electro-discharge machining.

## Patentansprüche

1. Drahtelektrode zur Funkenerodierbearbeitung, bestehend aus 5 bis 38 Gew.-% Zink, 0,1 bis weniger als 0,5 Gew.-% Silicium, gegebenenfalls Verunreinigungen, die in einer Menge vorliegen, die unzureichend zur Beeinflussung der Eigenschaften der Drahtelektrode ist, wobei der Rest aus Kupfer besteht.

2. Drahtelektrode zur Funkenerodierbearbeitung, bestehend aus 30 bis 40 Gew.-% Zink, 0,1 bis 1,2 Gew.-% Silicium, 0,01 bis 0,18 Gew.-% Aluminium, gegebenenfalls Verunreinigungen, die in einer Menge vorliegen, die unzureichend zur Beeinflussung der Eigenschaften der Drahtelektrode ist, wobei der Rest aus Kupfer besteht.

3. Drahtelektrode zur Funkenerodierbearbeitung, bestehend aus 30 bis 40 Gew.-% Zink, 0,1 bis 1,2 Gew.-% Silicium, 0,01 bis 0,18 Gew.-% Aluminium, einer Gesamtmenge von 0,05 bis 0,5 Gew.-% von bis zu zwei Additiven, ausgewählt aus Ga, In, Sn, Mg, Zr and Y, gegebenenfalls Verunreinigungen, die in einer Menge vorliegen, die unzureichend, zur Beeinflussung der Eingenschaften der Drahtelektrode ist, wobei der Rest aus Kupfer besteht.

4. Verfahren zur Funkenerodierbearbeitung, bei der eine Drahtelektrode nach einem der Ansprüche 1 bis 3 verwendet wird.

5. Verwendung einer Drahtelektrode nach einem der Ansprüche 1 bis 3 zur Funkenerodierbearbeitung.

## Revendications

1. Fil d'électrode destiné à l'usinage par un procédé électrolytique, constitué de 5 à 38% en poids de zinc, 0,1 à moins de 0,5% en poids de silicium, et d'impuretés éventuelles présentes en quantité qui n'est pas suffisante pour affecter les propriétés du fils d'électrode, le reste étant formé de cuivre.

2. Fil d'électrode destiné à être utilisé dans l'usinage par un procédé électrolytique, qui est constitué de 30 à 40% en poids de zinc, 0,1 à 1,2% en poids de silicium, 0,01 à 0,18% en poids d'aluminium, et d'impuretés éventuelles présentes en quantité qui ne suffit pas pour que les propriétés du fil d'électrode soient affectées, le reste étant formé de cuivre.

3. Fil d'électrode destiné à être utilisé pour l'usinage par un procédé électrolytique, contenant 30 à 40% en poids de zinc, 0,1 à 1,2% en poids de silicium, 0,01 à 0,18% en poids d'aluminium, 0,05 à 0,5% en poids au total de deux ingrédients au plus choisis parmi Ga, In, Sn, Mg, Zr et Y, et des impuretés éventuelles présentes en quantité qui ne suffit pas pour que les propriétés du fil d'électrode soient affectées, le reste étant formé de cuivre.

4. Procédé d'usinage par un procédé électrolytique dans lequel un fil d'électrode selon l'une quelconque des revendications 1 à 3 est utilisé.

5. Application d'un fil d'électrode selon l'une quelconque des revendications 1 à 3 à l'usinage par un procédé électrolytique.